# DEMANDE DE BREVET EUROPEEN

(11) **EP 3 787 190 A1**
(43) Date de publication de la demande: **03.03.2021**
(21) Numéro de dépôt: 19193810.9
(22) Date de dépôt: 27.08.2019
(51) Int. Cl.: H04B 5/00, H01Q 1/22, H01Q 7/00

(54) **ANTENNE POUR COMMUNICATION EN CHAMP PROCHE**

(71) Demandeur: The Swatch Group Research and Development Ltd, 2074 Marin (CH)
(72) Inventeur: SCORDILIS, Thierry, 2036 Cormondrèche (CH)
(74) Mandataire: ICB SA

(57) **Abrégé**

La présente invention concerne une antenne (100) pour communication en champ proche comprenant une piste électriquement conductrice (102).

Cette piste (102) définit de par son tracé une forme primaire de l'antenne et comprend un agencement de portions primaires (121) de mêmes largeurs et de portions secondaires (122) de largeurs différentes de celles des portions primaires (121) de sorte que l'agencement forme une image figurative (123) sur l'antenne (100).

## Description

### Domaine technique

Le domaine technique de la présente invention concerne celui des antennes, et plus précisément celui des antennes communication en champ proche.

### Arrière-plan technologique

Il est connu de l'état de la technique des antennes pour communications en champs proche. Ces antennes peuvent être visibles de l'utilisateur, et il est possible de modifier la forme de l'antenne afin d'améliorer leur aspect visuel.

Toutefois, à chaque modification de l'antenne, les performances de l'antenne sont altérées en conséquence et il convient de réadapter le circuit radiofréquence utilisé.

Il convient de trouver une solution qui permettrait de modifier l'aspect esthétique de l'antenne sans que le circuit radiofréquence utilisé ait à être adapter à ces modifications.

### Résumé de l'invention

La présente invention se propose de résoudre totalement ou partiellement ces inconvénients par l'intermédiaire d'une antenne pour communication en champ proche comprenant une piste électriquement conductrice ; ladite piste électriquement conductrice définissant une forme primaire de ladite antenne et comprenant un agencement de portions primaires de mêmes largeurs et de portions secondaires de largeurs différentes de celles des portions primaires de sorte que ledit agencement forme une image figurative.

Grâce à cette disposition, Il est possible de modifier l'aspect esthétique de l'antenne sans que le circuit radiofréquence utilisé ait à être adapter à ces modifications.

Selon un mode de réalisation, lesdites largeurs desdites portions secondaires sont discrètes ou varient graduellement.

Grâce à cette disposition, il est possible d'avoir une image figurative avec plus ou moins de détails.

Selon un mode de réalisation, lesdites largeurs desdites portions primaires et/ou desdites portions secondaires sont inférieures à 400 µm, notamment inférieures à 200 µm et de préférence inférieures à 150 µm.

Grâce à cette disposition, il est possible d'avoir une image figurative avec des détails et un contraste plus ou moins prononcé.

Selon un mode de réalisation, l'antenne comprend une distance entre lesdites portions primaires et lesdites portions secondaires, ladite distance étant inférieures à 400 µm, notamment inférieures à 200 µm et de préférence inférieures à 150 µm.

Grâce à cette disposition, il est possible d'avoir une image figurative avec des détails et un contraste plus ou moins prononcé.

Selon un mode de réalisation, ladite piste électriquement conductrice présente une longueur comprise entre 300 mm et 1200 mm, notamment entre 400 mm et 1000 mm, de préférence entre 500 mm et 900 mm.

La présente invention concerne également un procédé de fabrication d'une antenne pour communication en champ proche, ledit procédé comprenant au moins des étapes de :
- Fourniture d'un premier fichier comprenant image figurative et comprenant un premier ensemble de données ; ledit premier ensemble de données étant représenté dans un premier référentiel ;
- Conversion dudit premier ensemble de données dudit premier fichier en un deuxième ensemble de données ; ledit deuxième ensemble de données étant compris dans d'un deuxième fichier et étant représenté dans un deuxième référentiel ;
- fourniture d'un troisième fichier représentant une forme primaire de ladite antenne formé par une piste électriquement conductrice ;
- combinaison dudit deuxième fichier et dudit troisième fichier en subdivisant ladite piste électriquement conductrice en portions primaires de mêmes largeurs et en portions secondaires de largeurs différentes de celles des portions primaires ;
- agencement desdites portions primaires et desdites portions secondaires de sorte que à former ladite image figurative sur ou dans ladite forme primaire.

Grâce à cette disposition, Il est possible de modifier l'aspect esthétique de l'antenne sans que le circuit radiofréquence utilisé ait à être adapter à ces modifications.

Les modes de réalisation et les variantes mentionnés ci-avant peuvent être pris isolément ou selon toute combinaison techniquement possible.

La présente invention sera bien comprise et ses avantages ressortiront aussi à la lumière de la description qui va suivre, donnée uniquement à titre d'exemple non limitatif et faite en référence aux figures annexées, dans lesquelles des signes de références identiques correspondent à des éléments structurellement et/ou fonctionnellement identiques ou similaires.

### Brève description des figures

L'invention sera décrite ci-après de manière plus détaillée à l'aide des dessins annexés, donnés à titre d'exemples nullement limitatifs, dans lesquels :
- Les figures 1A et 1B représentent une antenne selon l'invention dans un mode de réalisation et une image figurative (120) respectivement ;

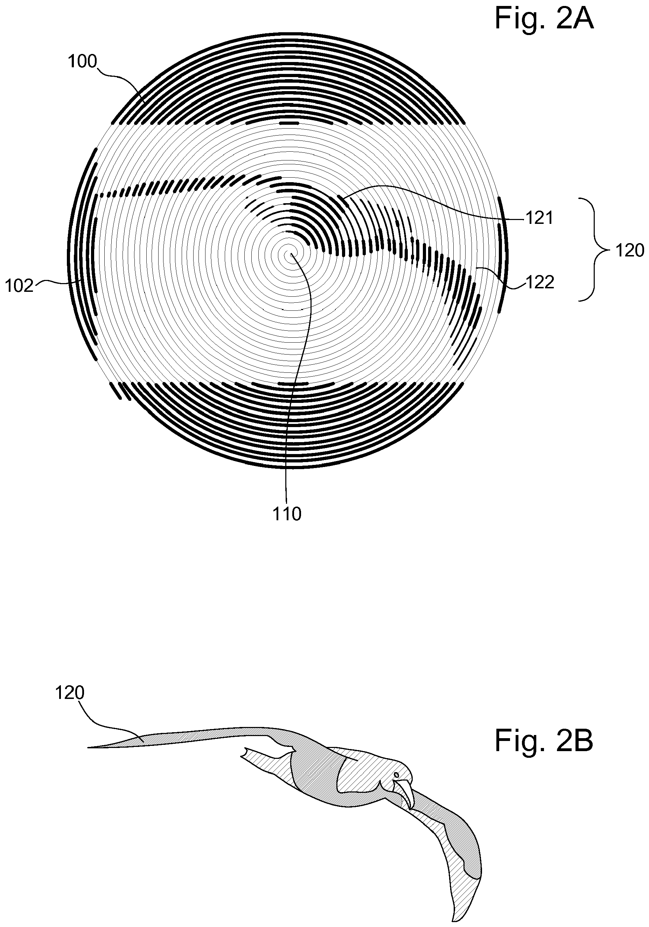

- Les figures 2A et 2B illustrent une antenne selon l'invention dans un autre mode de réalisation et une autre image figurative (120) respectivement ; et

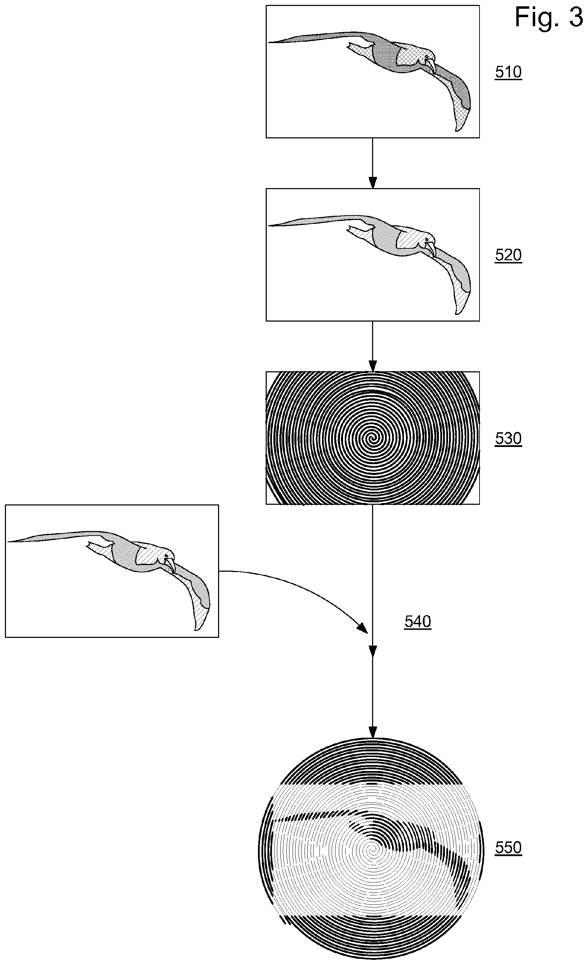

- La figure 3 montre un procédé de fabrication d'une antenne (500) pour communication en champ proche selon un mode de réalisation.

### Description détaillée de l'invention

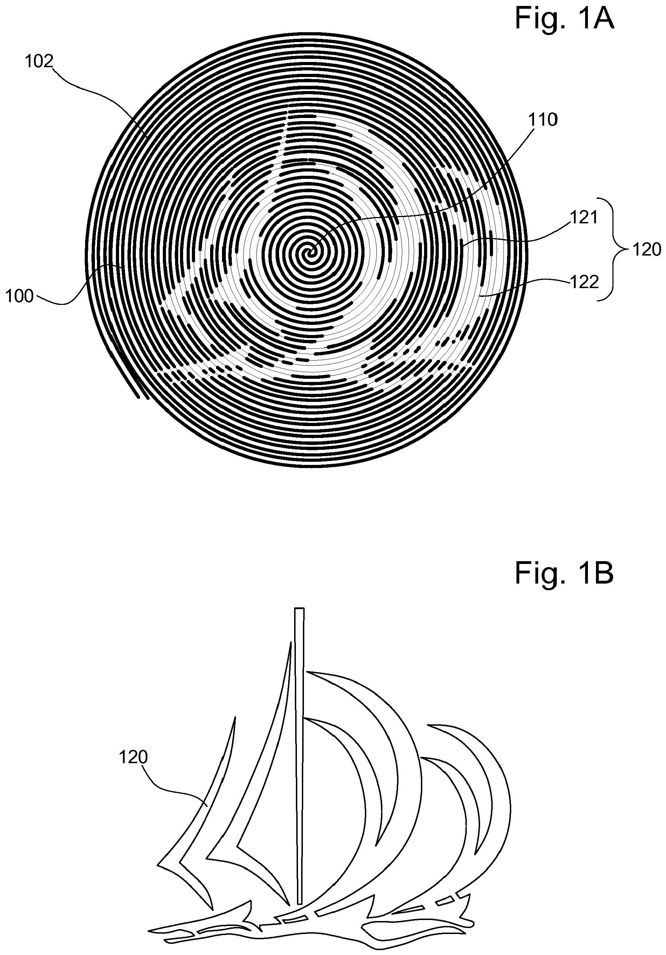

La présente invention, dont un mode de réalisation est illustré sur les figures 1A et 1B, se présente sous la forme d'une antenne **100** pour communication en champ proche comprenant une piste électriquement conductrice **102** avec une image figurative **120.**

Cette piste électriquement conductrice **102** définit une forme primaire **110** de l'antenne, qui peut se présenter sous la forme d'une spirale circulaire ou rectangulaire, d'un serpentin ou autre.

La spirale peut être simple ou multiple et peut être une courbe régulière et/ou irrégulière qui commence en un point central puis s'éloigne de ce point central de plus en plus à chaque spire, en même temps qu'elle tourne autour de ce point central. Alors qu'un serpentin peut être une ligne qui change de direction de manière régulière et/ou irrégulière.

Cette forme primaire d'antenne peut être formé par la piste électriquement conductrice **102** dont la longueur peut être comprise entre 300 mm et 1200 mm, notamment entre 400 mm et 1000 mm, de préférence entre 500 mm et 900 mm. Par exemple, si la piste électriquement conductrice **102,** c'est-à-dire la spiral comprend 4 spires, autrement dit 4 tours, avec un diamètre général de 40mm, la longueur peut être de 500mm et étant donné que le fonctionnement peut être à 13MHz, il en résulte une valeur de 1,5 µH environ à laquelle s'ajoute une capacité de 100pF. La piste électriquement conductrice **102** comprend un agencement de portions primaires **121** et de portions secondaire **122.** Les portions primaires **121** ont une largeur identique entre elles, alors que les portions secondaires **122** ont des largeurs différentes entres elles et différentes de celles des portions primaires **121** de sorte que l'agencement des portions primaires **121** et des portions secondaires **122** forme une image figurative **120.** Plus exactement, les largeurs des portions primaires **121** et/ou des portions secondaires **122** sont inférieures à 400 µm, notamment inférieures à 200 µm et de préférence inférieures à 150 µm.

C'est la modulation de ces largeurs des portions secondaires **122** qui permet de de modifier l'aspect esthétique de l'antenne sans que le circuit radiofréquence utilisé ait à être adapter à ces modifications ou plus exactement à ces modulations de largeurs. En effet, indépendamment de la largeur des portions primaires **121** et portions secondaires **122,** la piste électriquement conductrice **102** forme le tracé de l'antenne de manière ininterrompu et dessine la forme primaire **110** de l'antenne. Ce n'est que cette variation des largeurs des portions secondaires **122** et l'agencement de portions primaires **121** et de portions secondaires **122** qui forme l'image figurative **120.**

Plus exactement, ce sont ces modulations ou variations de largeurs des portions secondaires **122** qui forment l'image figurative **120** en contrastant le substrat, en général du papier, en faisant varier graduellement ou discrètement les largeurs des portions secondaires **122.**

Plus ces variations seront fines, c'est-à-dire graduelle, plus l'image figurative **120** sera détaillée et le contraste sera fin. Ce contraste peut également être conditionné par la distance entre les portions primaires **121** et les portions secondaires **122,** qui peut être inférieures à 400 µm, notamment inférieures à 200 µm et de préférence inférieures à 150 µm.

Cette antenne **100** peut être fabriquée par un procédé de fabrication d'une antenne **500.** Ce procédé comprend une étape de fourniture d'un premier fichier **510** comprenant un premier ensemble de données représentant une image figurative **120.** Ce premier ensemble de données peut être représenté dans un premier référentiel, c'est-à-dire dans un référentiel rouge, vert, et bleu avec ou sans canal alpha pour la transparence.

Ce premier ensemble de données **520** est ensuite converti en un deuxième ensemble de données avec un deuxième référentiel qui peut être une image en noir et blanc ou une image dont l'intensité lumineuse peut être modulé de manière à donner une représentation de gris. Ce deuxième ensemble de données peut être compris dans un deuxième fichier.

Un troisième fichier **530,** représentant la forme primaire **110** de l'antenne **100** formé par une piste électriquement conductrice **102,** est fourni par l'utilisateur et ensuite combiner au deuxième fichier. Cette forme primaire **110** peut être une spirale circulaire ou rectangulaire, un serpentin ou autre.

S'ensuit une subdivision de la piste électriquement conductrice **102** en portions primaires **121** de mêmes largeurs et en portions secondaires **122** de largeurs différentes de celles des portions primaires **121** de manière à créer un agencement **550** des portions primaires **121** et des portions secondaires **122** qui représente l'image figurative **120** du premier fichier sur ou dans la forme primaire **110**, sans avoir à modifier le circuit radiofréquence utilisé.

## Revendications

1. Antenne (100) pour communication en champ proche comprenant une piste électriquement conductrice (102) ; ladite piste électriquement conductrice (102) définissant une forme primaire (110) de ladite antenne et comprenant un agencement de portions primaires (121) de mêmes largeurs et de portions secondaires (122) de largeurs différentes de celles des portions primaires (121) de sorte que ledit agencement forme une image figurative (120).

2. Antenne (100) selon la revendication 1, dans laquelle lesdites largeurs desdites portions secondaires (122) sont discrètes ou varient graduellement.

3. Antenne (100) selon la revendication 1 ou 2, dans laquelle lesdites largeurs desdites portions primaires (121) et/ou desdites portions secondaires (122) sont inférieures à 400 µm, notamment inférieures à 200 µm et de préférence inférieures à 150 µm.

4. Antenne (100) selon l'une quelconques des revendications 1 à 3, laquelle comprenant une distance entre lesdites portions primaires (121) et lesdites portions secondaires (122), ladite distance étant inférieures à 400 µm, notamment inférieures à 200 µm et de préférence inférieures à 150 µm.

5. Antenne (100) selon l'une quelconques des revendications 1 à 4, dans laquelle ladite piste électriquement conductrice (102) présente une longueur comprise entre 300 mm et 1200 mm, notamment entre 400 mm et 1000 mm, de préférence entre 500 mm et 900 mm.

6. Procédé de fabrication d'une antenne (500) pour communication en champ proche, ledit procédé comprenant au moins des étapes de :
- Fourniture d'un premier fichier (510) comprenant image figurative (120) et comprenant un premier ensemble de données ; ledit premier ensemble de données étant représenté dans un premier référentiel ;
- Conversion dudit premier ensemble de données (520) dudit premier fichier en un deuxième ensemble de données ; ledit deuxième ensemble de données étant compris dans d'un deuxième fichier et étant représenté dans un deuxième référentiel ;
- fourniture d'un troisième fichier (530) représentant une forme primaire (110) de ladite antenne (100) formé par une piste électriquement conductrice (102) ;
- combinaison (540) dudit deuxième fichier et dudit troisième fichier en subdivisant ladite piste électriquement conductrice (102) en portions primaires (121) de mêmes largeurs et en portions secondaires (122) de largeurs différentes de celles des portions primaires (121) ;
- agencement (550) desdites portions primaires (121) et desdites portions secondaires (122) de sorte que à former ladite image figurative (120) sur ou dans ladite forme primaire (110).
